(19)

**Europäisches Patentamt**
**European Patent Office**
**Office européen des brevets**

(11) **EP 4 102 429 A1**

(12) **EUROPEAN PATENT APPLICATION**

(43) Date of publication:
**14.12.2022 Bulletin 2022/50**

(51) International Patent Classification (IPC):
**G06Q 10/06** $^{(2012.01)}$

(21) Application number: **22178501.7**

(52) Cooperative Patent Classification (CPC):
**G06Q 10/06**

(22) Date of filing: **10.06.2022**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **10.06.2021 IT 202100015254**

(71) Applicant: **ESG Engineering Italia S.r.l.**
**51100 Pistoia (IT)**

(72) Inventor: **TOSCANO, SALVATORE**
**51100 Pistoia (IT)**

(74) Representative: **Minghetti, Mauro**
**Apta S.r.l.**
**Piazza dei Martiri, 1**
**40121 Bologna (IT)**

(54) **INTEGRATED AGRO-INDUSTRIAL DIGITAL PROCESS**

(57) An integrated agro-industrial digital process, for the production of a food product or ready meal by a sequence of raw material processing stesps, comprising the steps of issuing a certification and compliance protocol for the product or ready-made dish; associating the product or ready-made dish with a respective transformation path of the raw materials involved in the realization of said product or said ready-made dish, comprising a plurality of steps; performing molecular tracking of each raw material involved in the realization of the product or ready-made dish; carrying out the production control in each processing step, so as to define a line coefficient (Rp), ranging from 0 (compliant) to 1 (non-compliant), with discrete or continuous values; calculating the $CO_2$ produced at each processing step, also considering the percentage contribution resulting from the production of $CO_2$ for all activities ancillary to pure production; calculating the amount of compensated $CO_2$, derived from specially provided forest or wooded areas, produced during said production steps, so as to define a compensation coefficient (C) of $CO_2$ produced, ranging from 0 (compliant) to 1 (non-compliant), with discrete or continuous values; verifying, for each processing step, the recognition of a premium return to all human resources that contributed to the realization of the product or ready-made dish, so as to define a circular economy remuneration coefficient (R), ranging from 0 (compliant) to 1 (non-compliant), with discrete or continuous values; verifying, for each processing step, the recycling of waste products and/or energy conversion for its own uses, so as to define a recycling coefficient (E), between 0 (compliant) and 1 (non-compliant), with discrete or continuous values; calculating the average of said coefficients (Rp, C, R, E), so as to obtain an overall coefficient of compliance (TAP) of the process with said protocol.

FIG. 1

PROTOCOL FLOW CHART

**Description**

TECHNICAL FIELD OF THE INVENTION

The present invention relates to an integrated agro-industrial digital process. Specifically, the object of the present invention is an innovative integrated agro-industrial digital process that, by combining three technologically advanced systems, is capable of improving and securing existing agro-industrial practices, and is regulated through its "Tech-Agrarian Protocol" (TAP) described in detail below.

The process complies with the guidance issued by the United Nations as part of the 2030 Agenda for a Better World (17 SDG Points) and with all food production process control requirements established by both the European Commission and Italian law.

The process developed to date is focused on the entire food supply chain, but may be extended to different sectors that are able to adopt a process similar and assimilable to the concepts *driving* this system, in complete transparency, which is based on circular economy criteria and guarantees full offsetting of the $CO_2$ produced in the relevant industrial process.

Recognition of full compliance with the process described so far is attested per individual product by a certificate of "TAP compliance," the details of the protocol are declined in a specific specification for each process line considered. Traceability, in the agri-food chain, which has become mandatory for all agri-food companies since January 2005, is defined as "the ability to trace and follow a food product, feed, food-producing animal or substance through all stages of production and distribution" (EC Reg. 178/2002).

In order to comply with this legislation, a continuous monitoring of all stages of the production chain, from the collection of products on field, to the evaluation of the incoming raw material, to the analysis of the final product must be performed.

The invention aims to provide an answer to the problem of total traceability. Also, it enables to achieve optimization of all production processes, a univocal certification for each individual product, and demonstration of offsetting of the $CO_2$ produced by exploiting, in adequate quantities, the natural results from photosynthesis processes, on dedicated forested areas, enabling their exact balancing.

All the individual processes, complex and inhomogeneous in their form, were organized and considered as subsystems connected to each other by means of an analytical formula that enables their quantitative evaluation and uniquely identifies their outcome.

The invention is based, through appropriate advanced information system developments, on the original integration of three pivotal processes based on innovative solutions:

- "Molecular" Traceability System for the control of the agri-food chain, which offers a safe and rapid method for traceability through varietal identification of fresh product and traceability of the finished product. This system is based on the use of DNA molecular markers, SSR, SNP and In/Del.

This methodology of analysis can be applied:

a. both in the agricultural sectors, starting from the seeds used for crops to the relevant stages of development and processing;
b. both in the livestock breeding sector with regard to breeding "processes/protocols," animal husbandry practices, and the processing into agri-food products;
c. as well as in the control of "preparations" such as "ready meals", "sauces" and the like.

- the Digital Certification of the "authenticity" of Agri-food Products that complying with the SDG (for a better world) legal framework and directives issued by the United Nations/Agenda 2030, guaranteed by security software processes and special unique labeling.
- the evaluation and calculation throughout the entire chain of cultivation/breeding and processing of such, of the $CO_2$ generated per each individual product, and its corresponding zeroing ("carbon footprint zero") through biological recovery mechanisms ("offset").

STATE OF THE PRIOR ART

Global food production will increase dramatically within the next 30 years, and it is estimated that between 25 percent and 100 percent more food will have to be produced than at the current level.

One of the key factors in this increase in demand for agricultural production is the expected growth of the world's population, estimated at about a 25% increase by 2050.

This will obviously cause a demand for food production to meet the requirements for nutrition and thus for raw material from agriculture and livestock farming. These trends have been observed in major producing and exporting countries, and this puts the future of global food supply at risk.

At the same time, agriculture faces challenges that threaten the future of global food security: unsustainable attitudes in the production sector cause negative impacts on global pollution, and on resources across the planet.

In addition, the population of farmers worldwide is aging, and generational turnover is in crisis due to the low attractiveness of these jobs.

This is attributable to various factors such as: the migration of young people from rural to urban areas; the increase in their average level of education and thus expectations; the opportunity for better remuneration in sectors other than agriculture; negative perceptions regarding livestock-related jobs; and additional difficulties related to economic aspects such as the high cost of land and access to credit.

In combination with forestry and other land use industries, agriculture is the second largest contributor to global greenhouse gas emissions, surpassed only by the burning of fossil fuels for electricity and heat production.

In fact, a large percentage of the global atmospheric concentration of greenhouse gases is accounted for by:

- carbon dioxide emissions associated with the conversion of forests to agricultural and grazing land,
- methane and nitrous oxide emissions from livestock farming and land management practices.

Today, industrial agriculture is responsible for nearly 70 % of deforestation in Latin America and 30 % in Africa and Asia, continents that account for nearly 70 % of the planet's total forest area and are essential to the balance of the global carbon cycle, the livelihoods of hundreds of millions of people, and the conservation of plant and animal biodiversity.

Current industrial agricultural practices are largely unsustainable, contributing:

- to the depletion of the planet's natural resources,
- to soil degradation (such as depletion of soil fertility and increased vulnerability of soil to erosion),
- to water scarcity (with irrigated agriculture accounting for 85 percent of
- global water consumption and 6 percent of global water withdrawals),
- to the endangering of their own existence, increasing agriculture's vulnerability to climate impacts.

The need to make the entire production chain sustainable has often led to the neglect of rigorous controls in production throughout the food chain, penalizing quality and transparency.

Although precise specifications have been established to qualify productions, the lack of transparency in food manufacturing and production processes have not yet ensured product quality, and has allowed secrecy to often be intended to preserve trade secrets and competitive advantages - often also as an excuse to cover up violations of food laws and ethical practices.

It is precisely the lack of traceability in supply chains and the increased global media exposure of food fraud scandals that have contributed to a growing level of public distrust.

Moreover, as evidenced by the European Commission's monthly summary reports on food fraud, violations of international food law and fraud scandals are on the rise.

In recent years, consumer awareness of nutritional choices has grown significantly, appreciating health, authenticity, sustainability and ethics of products as determining values.

The digital revolution, providing unlimited access to information, is enabling the growth of informed and aware consumers, and with it the importance or increasingly the need to make "visible" the whole process of transformation of a product, from its conception to the moment of its consumption.

Even if the Italian agricultural production system does not make the characteristics of products sufficiently evident, it is still a leader in terms of organic, sustainable agriculture and in terms of biodiversity conservation.

In addition, so-called "green" enterprises are difficult to make profitable; although the trend is swiftly improving, consumer awareness is still conditioned by price and not always by value for money or attention to what is "really" being eaten.

AIMS OF THE INVENTION

The aim of the present invention is to provide a concrete answer to the problems previously identified by enhancing, in a concise and integrated approach, food product transformations (for any complexity of processing) thus univocally certified and sustainable, and doing so without having significant impacts on production costs, indeed allowing the profits of the processing chain to be distributed to all its components.

Within this aim, it is an object of the present invention is to provide, to the final consumer and/or any other interested party, a means of traceability of the entire food chain involved in the production of a given product.

Another object of the present invention is to ensure, by calculating the $CO_2$ consumed in the production process and that resulting from the appropriate forestry "management" activities, the resulting "carbon foot print zero."

From the analyses and simulations carried out, it is possible to demonstrate that the present innovative process, by providing for the applicability of a single system, developed ad hoc, to the entire food supply chains may:

- ensure a "green" approach and compliance with the 17 recommended United Nations objectives,
- provide inherent optimizations at all processing phases, minimizing environmental impact,
- clearly inform the end customer by providing a univocal certificate of authenticity,
- attest the execution of the zeroing of the $CO_2$ produced,
- ensure fair remuneration throughout all stages of operations,
- allow significant levels of profitability to be achieved, ensuring sustainability to each element of the supply chain (e.g., farmer, rancher, etc.).

The final objectives that are achieved by the application of the process according to the invention are:

- the transparency of the entire production chain, achieved through the possible step-by-step verification of each process at each of its stages, both for the agricultural and the livestock phases, to the final transformation into a marketable product;
- the evidence (once individually calculated by an entity in charge of the certification) of the zeroing of $CO_2$ produced, through appropriate compensation.

This is achieved, in particular, by the issuance of a univocal certificate linked to each product.

With this innovative approach, the various technologies are integrated into a single process, which is controlled by an advanced, purpose-developed computer system, which in turn can:

- provide on demand all the information related to the various steps of the process itself (allowing continuous control of compliance with the standards and established procedures);
- make it accessible and viewable to the consumer, through the appropriate app on their communication device (cell phone, tablet, etc.), for each product, all the data relating to the various stages of production, its nutritional properties, specific qualities etc., and guarantee its certified authenticity once the purchase is made.

In fact, it is the same tech platform that:

- acquires and records in real time all data-including images, or data on animal movements, rather than physical-chemical parameters of the soil and environment, or key parameters along production lines, rather than the number of packages and/or dishes prepared in compliance with individual recipe raw material transformation processes, etc;
- stores and processes such data, enabling optimization in the use of resources and efficiency in reuse/recycling, such as water (e.g. with possible recycling through appropriate technological systems provided), energy (e.g. through energy production systems with small biomass power plants or solar plants, etc.), waste in food production (redirected to the appropriate recycling systems);
- increases the quality of production management and forecasting support through its AI (artificial intelligence) capabilities and regulates its flows, manages its storage and distribution, checking step-by-step compliance with set requirements and reporting any anomalies;
- allows, by also assessing the history of any critical issues and related risks, to automatically guide timely verification and/or real-time surveillance processes (in the field but managed remotely) as well as routine checks, limiting inspections by specialized personnel to anomalies or emergency situations;

it also directly manages all administrative processes related to the purchase of raw materials, the related transition between one point and the next in the supply chain, and the costs incurred in all process stages up to the delivery sale of the product, adapting to the corporate architectures of reference, so as to be able to control in real time the economic-financial-administrative situation and also give transparency to the annual reward process provided for each "person-worker" who has contributed within the entire process, in accordance with the circular economy concept adopted.

BRIEF DESCRIPTION OF THE DRAWINGS

Figure 1 is a diagram representing the connections between the main process components of the entire production chain;

Figure 2 is a graph representing, as an example, the production line for making pasta intended for the preparation of ready meals;

Figure 3 is a graphic schematization of the flows and calculations related to the TAP coefficients and the $CO_2$ produced.

EMBODIMENTS OF THE INVENTION.

The process according to the invention (TAP, Tech-Agrarian Protocol) certifies the entire food supply chain.

For each of its components, it integrates data on each production, defined according to detailed ad hoc specifications designated procedures based on the most innovative technologies and scientific methods.

For each product, univocally identified and classified, the process has multiple purposes of providing the consumer, not only with indications of the origin of the individual components (raw materials), but also of all the processes of their transformation, as well as managing the development of the supply chain, evaluating all its characteristic parameters in compliance with the United Nations directives.

These aims are achieved by meeting requirements for health, organic production, cultivation and breeding according to certified quality standards, processing with environmentally friendly industrial processes and using only controlled raw materials, recycling of waste, economizing natural resources (e.g., water), and saving energy.

In addition, these aims are achieved by quantifying and offsetting the $CO_2$ produced, and by ensuring the application of circular economy criteria according to sustainable and innovative management of the entire agrifood process.

Each element of the chain is controlled, evaluated, managed and integrated into a single system (using state-of-the-art technologies and communication, sensing and automation systems), capable of interacting so as to make continuous improvements in production efficiency and quality (e.g., precision agriculture), also using artificial intelligence systems so as to predict critical situations and limit possible damage, minimize risks and make a typically "critical" sector sustainable.

The certification of compliance with TAP, remotely verified step-by-step by an advanced system, is made transparent to the consumer on each product identified with a univocal code associated with its entire development.

This certification also has further applicability: it allows any producer to participate in the system, conforming to the established specifications, enjoying the optimizations of the processes in which it participates, falling within the circular economy flows that ensure its sustainability, and minimizing its environmental impact.

The process according to the invention quantitatively and functionally expresses the set of agricultural, production, and raw material processing activities and their relative offsetting of the $CO_2$ produced, making the derived values as univocal certifications for each product, accessible from any system, including mobile devices, enabled to interpret the QR code associated with the product itself.

The process governs a complex eco-sustainable system based on the concept of circular economy that manages both the production and social aspects, such as the personnel involved, as well as those of an integrated management capable of distributing fairly, at the various stages of the process, the economic returns and assessing, for each state step (e.g., production step), the best conditions for its performance and obtaining, therefore, an implicit optimization.

For a complete definition of the process, with this mathematical-innovative approach it is necessary to identify the various elements, their functional interrelationships and the management system that regulates them.

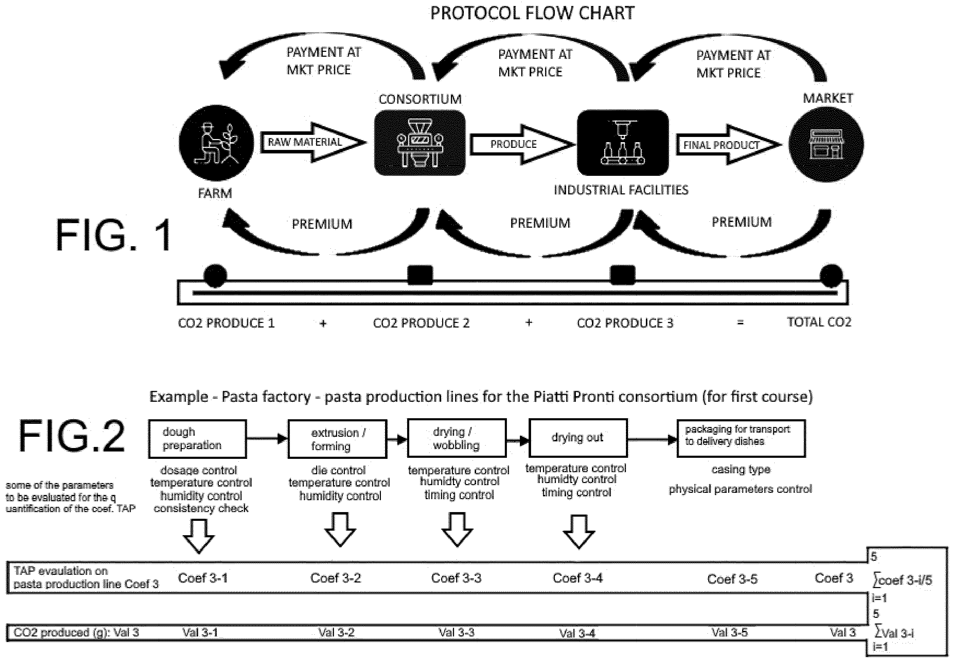

The diagram in Figure 1 illustrates the connections between the main components of the process chain of the entire production chain that is intended to be managed in an integrated manner.

In fact, the integration of the entire process is enabled and regulated by the complex proprietary and ad hoc developed IT platform, which simulates and manages all the different activities of the supply chains according to circular economy logic and selected protocols, evaluating both resources and outputs, and economic management.

Different accesses are allowed and provided to this platform, by type of activity/functionality characteristic of the applicant, and authorizations with security controls according to appropriate hierarchical levels.

The information system, based on IoT and artificial intelligence systems, as well as integrated with state-of-the-art telecom technologies (fixed, mobile, satellite networks etc.), is also designed to ensure the monitoring, management, control, processing, forecasting, presentation and provision of raw and/or processed data. It provides specific functionality for each element in the production chain and complex functionality for inter-functional element management.

For each element/subsystem there is a process standard that, if not met in full, excludes access to participation of that element in the TAP certifiable system.

That is, for example, if a farm wants to be able to include its wheat crop in the production cycle, it must comply with the "standards" provided for the "farms" element in the TAP, or else it will be excluded from certification and thus from product acceptance.

Listed below are the main elements of the TAP process (further elaborated for each element) the associated processes will be specified.

*Farms:* it is envisaged that such Farms can contribute to the system of crops such as for example, grains, fodder and other of kind, grapes, olives, fruits, a wide selection of horticultural products, and by-products of cattle, sheep and pig breeding, including but not limited to milk, wool, meat.

*The Processing Consortia:* there is one consortium each dedicated to a commodity processing chain (dairy, pasta factory, bakery, greenhouse production, ready-made meal production, sauce production, juice production, packaging systems, storage systems, logistics systems etc.) but the process can easily be extended to other forms of processing that are not specifically described herein.

The consortium format for industrial productions was chosen as an example because this solution provides for the co-participation of "producers" of raw or "pre-processed" materials within the industrial dynamic as a significant element of the circular economy.

It is important to note that some productions that are processed by some consortia are then considered "raw-material" for other processing consortia, which produce "drop-down," always following the same rules for production.

*Industrial facilities:* within the consortia themselves, but not limited to such, it is envisaged for the organization of production lines that enable, through the handling (cutting, cooking, packaging etc.) of raw materials or pre-processed products, to transform such into ready-to-eat products.

The subsystems supporting the process are listed below.

*Molecular tracking:* at each raw material processing stage, a constant monitoring and control of the raw materials and products will be performed during processing to verify and guarantee its origin.

*Production control:* along each production line it is envisaged the control of the conditions under which a specific line works, and in the same way there are open-air control systems for agricultural productions and/or areas dedicated to livestock farming with the use of the most advanced technology available today. Each stage is controlled and univocally associated with the raw materials being processed and the products.

*Calculation of $CO_2$ produced:* for each stage of production, starting from agricultural productions, to livestock farming, and to other various but similar transformations, a computation of the amount of $CO_2$ produced will be performed which will then be added together at the various stages to calculate, keeping the weighted proportions of use, for each product, the retail value.

*Subsystems for the calculation of the $CO_2$ offset:* it has been envisaged for the calculation of the equivalent for balancing through photosynthetic and conservation processes of forest crops and green/forest areas.

*Calculation system for the closing of the circular economy cycle:* a compensation system is foreseen that defines *a priori* the redistribution of profits from the various stages to the workers involved in the production cycles and devotes part of them to the scientific development of research for the continuous improvement of each stage of the processes.

*System for recycling and energy production for own uses:* it is foreseen to include in the entire process both the reuse of waste in green systems of biomass energy production (with advanced technologies) as well as the installation of solar panels or, where possible, the exploitation of alternative solutions such as geothermal energy ensuring complete energy needs.

*Certification system of transparency and uniqueness:* it is envisaged that each product is assigned a code to which is associated a certificate that guarantees its uniqueness and compliance with the entire production protocol, and also allows its "history" overview; all this is possible through the use of encrypted systems that ensure the "security" of the data, and exclude its possible tampering.

The following is a summary description, for each element previously identified, of the protocol that must be observed, through the main items of assessment of its reliability and consistency.

In addition, in association with the description of this process, a technical specification manual will be defined for each process step so as to identify, with numerical coefficients, its compliance with the system.

In particular, for each item indicated by the specification, each belonging to a single element, a score will be given ("0" if full compliance, "1" if non-compliant).

For each element, the sum of the marks will be calculated and divided by the number of items evaluation items.

At the end of the process, an average will be calculated on the total number of items: if this is less than 0.25, the TAP process will be considered fully compliant.

If, on the other hand, this value will be between 0.25 and 0.40, the critical process responsible for raising the mean value will have to be reviewed, and undergo corrective actions.

If that value is greater than 0.4, this will indicate that compliance with TAP has not been achieved and therefore any product subjected to that process will not be accepted nor certified.

The Farms

Any farm that wants to bring its product (e.g., grain, olives, grapes, fruit, vegetables - for agricultural activities - or milk or meat - for livestock systems) into the TAP process chain must, not only comply with all existing regulations for organic and European Commission directives, but must also allow the control entity managing the system (hereafter referred to as the ECS) to monitor/verify, with its own technological means, both land use and animal distribution on the land.

On such farms, the type of protocol involves the verification, through specific analytical techniques (bio-chemical or physical parameter analysis, or verification with remote control systems...) of the following main points, both for agriculture and livestock farming:

*Parameters for agriculture*

*Soil control:* meaning, its composition dependent on: the texture of the soil-genetic substrate and the manner in which its formation and evolution; on the agronomic practices to which soils are subjected periodically; and on the organic matter contained in the soil itself. It is necessary that:

- only natural (i.e., not chemically synthesized) fertilizers will be obtained from the raising of organic animals;
- crop rotations and careful tillage are practiced to maintain (or, possibly, improve) soil structure and soil organic matter;
- pesticides that are not chemically synthesized are used and, as far as possible, "traditional" pesticides (such as verdigris) or adopted biological pest control with antagonists.

*Seed control:* sowing must be done with selected, absolutely non-GMO, organically sourced seeds, which are previously analyzed for verification and guaranteed by molecular tracing.

It is planned that, in the future, seed breeding may also take place independently so that, once selected, they will become the only ones used for crops within the TAP system.

Conservation techniques for the selected seeds are also the state-of-the-art and comply with all the specifications set forth in the National Plan for Biodiversity of Agricultural Interest, where guidelines for the conservation and characterization of plant biodiversity of agricultural interest are defined.

*Control during crop growth and at harvest:* through systems of advanced technology, it is foreseen for continuous monitoring of crop growth so that any watering and/or fertilization interventions or pesticide treatments can be dosed and minimized (always only among those provided for in the TAP specification) and the best time for harvesting can be identified (by maturity, etc.). It is also foreseen an optimization for the use of waste or its recycling for energy production.

*Control of crop processing and storage:* each type of product involves different post-harvest stages with control, in each, of the characteristic parameters for the best conservation.

Consider, for example, that of cereals: the production of products from them involves certain careful steps, which must be carried out with special machinery and according to precise procedures.

Once the product is harvested it is still fresh, and therefore still contains a fair amount of water in it.

But moisture is a counterproductive element for the proper conservation of the harvested product, and must be below a predetermined maximum limit.

For this reason, drying and proper storage of the product must be carried out before proceeding to further processing steps, following harvesting, such as milling, separation of the various components and subsequent storage, i.e., up to the raw material processing stage (e.g., grain to flour, with separation of the various components).

In this case, the tracking system involves continuous monitoring of temperatures, humidity, accumulation and storage methods to ensure proper preservation until transport to the place where the raw materials are processed (e.g., mills, etc.). Similarly, for each agricultural product there is a procedure and process standard to be followed, so as to ensure, in transparency, the traceability of each process step until transport to the place of subsequent processing or use.

*Parameters for breeding*

*Land control:* The area set aside for the development of a livestock species must be suitable for the species to be raised, in terms of climatic and environmental conditions, and must ensure that suitable open spaces can be maintained.

The density of units per hectare must meet the standards for non-intensive and organic livestock farming.

The number of livestock per unit area must be limited so as to allow integrated management of animal and plant production at the production unit level, and so as to minimize pollution of soil and surface and ground water.

Open areas dedicated to livestock farming must be controlled on their boundaries (i.e., on fences delimiting properties), both to exclude uncontrolled entry of both livestock and access by unauthorized persons, and to prevent undue abduction; areas reserved for "closed" shelter or housing areas include free areas, and others specifically equipped for various functions (weaning, milking...) and must provide for control of both physical (temperature, humidity...) and hygiene parameters, and proper operation of each of the functions to which they are dedicated, with verification that the physiological needs and optimal conditions of the animal are met.

*Control of the distribution and movement of the animals in the area reserved for them:* each animal is equipped with its own chip, which makes it possible both to know in real time its position and movements, and its state of health, through special sensors that measure its main vital parameters, and to manage it safely and naturally, so that it can be left in the wild or semi-wild pasture, having continuous knowledge of its state and behavior and not least guaranteeing its safety from possible abductions/theft.

*Control of reproductive stages:* the reproduction of farmed animals takes place in a natural way and under veterinary control.

Newly born animals (sucklers) are kept in dedicated areas to allow their growth in the early stages of life under control, and in contact with the broodmares to allow their proper and natural feeding; uses of growth stimulants and synthetic amino acids are excluded.

Any dietary supplements are allowed only of a biological nature.

The control system provides for knowledge and recording on a per-unit basis of everything that starts during the growth spurt.

*Control of growth stages and health conditions:* it is possible to monitor the status of each animal, and knowing its location, intervene as needed ensuring the preservation of the health status and verifying its growth; it is also possible, through the intervention of mobile sensors mounted on appropriate supports (drones), to see the aggregations of animals, their movements and to know their preferences for grazing areas and the distribution of excrement.

The latter needs special attention, as it can cause pollution and must be controlled so as to avoid accumulation of ejections that are instead reused as natural fertilizers and/or for energy reuse.

Allopathic medicines (including antibiotics) may be used only when necessary and recorded in the form associated with each animal; phytotherapeutic systems are generally used and preferred.

*Feeding control:* animals must live in a wild or semi-wild state, with feed based on pasture and fodder: supplements to the diet are only of natural origin, and that meet the nutritional requirements at the various stages of development.

*Control of organic waste recycling or disposal:* with monitoring systems, organic waste can be managed where there is accumulation, and collection and disposal through the use of biomass systems are provided.

For each animal, a record is provided that traces its entire life stages from origin (genetic line) to growth, any diseases, treatments, feeds and all significant parameters that identify it.

Processing Consortia

Processing units are defined as all organizations that start from individual agricultural or livestock production and turn it into a product, or in the case of "ready meals," start from both agricultural/livestock production and products resulting from other consortia.

Each processing stage is controlled according to a specification associated with the individual supply chain that identifies its specific characters, then sets the control parameters and quantifies the required values, to enable verification to TAP compatibility.

Fruit and vegetable production has also been included in this group, only if it comes from areas dedicated mainly to greenhouses, which provides for the growth and germination of seeds of known and controlled origin as processing. Apart from the singularity of the individual production consortium, all must provide for a general organization that, too, contributes to the calculation of the TAP coefficient through an evaluation by specific item, and in particular (non-exhaustive list, any typicality will be identified and included in the individual consortium's specifications):

- definition of a model that identifies all flows/protocols and procedures in relation to sensitive activities and related internal control safeguards;
- compliance with the relevant regulatory framework;
- mapping, calculation and verification by risk assessment and gap analysis;
- definition of corporate organization with specification of powers, duties, information flows and responsibilities;
- appointment of a Supervisory Board;
- schematization and modeling of individual production lines for their control and detailed analysis (critical points, intervention possibilities, etc.);
- physical, chemical, biological and nutritional characteristics of incoming materials - before processing into products - (i.e. their "TAP" certification, with associated coefficient).

The following are considered as processing consortia, by way of example.

Example 1: Cereal Consortium - cereal processing into derivatives such as bread and pasta.

The following main controls are associated with these.

*Control of grain provenance:* molecular traceability is provided for the acquired material and the guarantee of traceability of its origin, which by the way is already in the ECS platform system, because it comes from farms that have received TAP compliance.

In case the origin could not be certified according to the accepted standard, such raw material could not be included in the production process. Each type of grain (specifically wheat) is kept separate by quality, species, category and origin.

*Control of milling processes:* depending on the type of milling mill (stone or cylinder) selected according to the products to be obtained, individual process steps such as cleaning, wheat selection and actual milling are controlled. During each of these processes, significant parameters such as moisture content, temperature, separation of the various elements, and milling level are monitored, and values associated with each batch of wheat (from the example) and each package of flour or derived material are stored in the control system (whole grain, type 2, 1, 0, germ, bran, etc.).

*Control during transport stages:* once the environmental conditions have been defined that must be met for optimal flour preservation, these parameters are also monitored using special sensors during the transport stages from the milling area to the area of processing into product. Again, the association of the parameters and their maintenance within the required values is guaranteed for each package that is transferred, thus continuing traceability.

*Control at the bread production stage:* the process involves a production line defined by a series of machines and human interventions: for each step, the correctness of the expected realization is verified, and compliance with the timing, environmental conditions, etc., and the "batch" of flour being processed is uniquely associated with it; all the additional components used in the realization are also controlled, with the same criterion of traceability of the origin and where necessary of the quality of the ingredient used (e.g.: water analysis, verification yeast quality, etc.).

*Control in the production phase of the pasta:* the manufacturing process involves various stages and different production lines characterizing the type of pasta, the type of flour mix used and the format to be obtained.

In this process, therefore, all the components (e.g., flours, water) with their origin, or quality analysis (where appropriate) are analyzed and associated with the individual production, and for each individual step the execution parameters and environmental conditions are checked until the quality verification for the finished product (containing the traceability of its components and the verification of its execution as defined in the requirements).

*Control during the packaging stage:* in the case of the bread and pasta supply chain, different controls are provided depending on whether the product is to be portion-packed or is to be sent for further processing:

- *by individual package:* the individual product is checked, weighed, kept at the prescribed temperature and humidity (always under control), it is fed onto the packaging line, and at the end of the line the QR code is imprinted on the package itself, which contains all the information for the univocal identification of the package (see the point certification of transparency and uniqueness);
- *for the product that is to undergo further handling/processing:* the conditions for maintaining the product (temperature, humidity, etc.) must be checked even in the event of further transportation. The historical conditions of its traceability continue to be associated with each batch of product until the next transformation or processing. This processing will also start from the intake of the individual basic product (with its univocal identification) and complete its path, keeping continuous track of it (associated with all the control parameters provided) during each of its processing stages such as, for example, the input into the pasta cooking line for the preparation of a "ready meal" which will be in this case the final product to which the univocal QR code will be associated.

Example 2 - Agricultural Fruit and Vegetable Consortium - predominantly greenhouse fruit and vegetable production.

Whether conventional, outdoor, tunnel or very high-tech greenhouse installations, a series of controls must be ensured to ensure the quality and origin of the product; these controls are listed below.

*Seed provenance control:* derived from organic production and afterwards directly reproduced with TAP specifications.

*Water control:* if the crops are of conventional type, will be controlled (not exclusively, but as an example): the quality of water used for watering (i.e. its chemical, organic components, PH, etc.), the optimization of its use (through processing results based on in situ monitoring systems of significant parameters, combined with crop types, etc.), wastewater recovery; if the crops are of hydroponic or aeroponic greenhouse type, the physicochemical parameters of watering and their timing of distribution, temperature, relative humidity, amount and type of lighting, water collection, its filtration and recycling, etc., will be monitored.

*Soil control and fertilizer use:* for open crops, soils, the presence of microorganisms and substances are analyzed so as to maintain their bio-balance, providing for rotation in different crops to regenerate soil resources while minimizing the use of fertilizers while still natural.

*Control of crop treatments:* continuous monitoring of crop areas (both outdoors and in greenhouses) allows to prevent or intervene appropriately and promptly in the case of some disease or infestation, using antagonistic criteria where possible, and limiting only in extreme cases the use of pesticides, but only of plant origin.

*Control of developmental stages and choice of harvest time:* a network of optical (at various frequencies) and temperature/humidity sensors (e.g., using dry and wet bulb thermometers) allow even remotely to have continuous control of crop development, and to choose and schedule the appropriate time for harvesting, avoiding wasteful harvest management.

*Control at storage and prepacking stages:* time is minimized by possible scheduling in harvesting; treatments required for pre-packing are then carried out according to a schedule of actions planned and controlled on time.

*Control in the transport stages:* environmental conditions are controlled to ensure appropriate storage during transfer.

Industrial facilities

For each supply chain, and at each processing stage, there are industrial plants with standardized processes and with controls on each individual step within the plant itself or the production line; the specification associated with each production stage regulates the individual parameters to be considered and the requirements that must be met in order for each control to yield satisfactory results for achieving compliance with the TAP protocol.

TAP coefficient values will be calculated based on the combination of the various facilities and production lines contained within the industrial plant, which are in turn broken down into subsystems, each of which will provide both a coefficient calculation for TAP and a value for calculating the $CO_2$ produced at each processing step.

The exploded view of this approach is defined in the subsystem for production control (or rather production line), which by providing a unique parameter for each production line (line coefficient) then allows a check to be made on the entire industrial plant, evaluating its TAP coefficient.

Similarly, the individual line $CO_2$ calculation subsystem allows for an overall assessment of the $CO_2$ that needs to be compensated for the activity of each industrial plant.

The supporting subsystems

These are the methods or technological systems adopted for quantitative verification at various stages of production of TAP coefficients, the parameters of which are automatically entered into the memory of the IT platform, which through the encrypted and protected system, generates the certification.

*Molecular tracking:* is applied at each processing stage of the plant, to ensure the traceability of each component of the product. In the parameterization of the values required for "TAP" certification, there can be only positive outcomes (coefficient="0") or negative outcomes (coefficient="1", and in this case the interruption of the process that would not allow certification). Verification of the individual component signature is ensured by external examinations performed by certified research centers.

The software platform provides for the univocal association of each analysis with each product in each transformation process.

*Subsystems for production control:* in each production line, individual stages are identified, and each of them is associated with control parameters specified in the appropriate specification, each of which contributes to the calculation of the TAP coefficient for the identified stage, and their combination allows the calculation of the TAP coefficient for the entire production line, called the line coefficient. Consider, as an example, the production line for pasta intended later for use in the preparation of "Ready meals."

Identification of stages:

- dough preparation;
- extrusion and forming;
- drying and wobbling;
- drying;
- packaging for transport to ready meal consortium.

For each of these stages, the parameters to be controlled during the process are identified, and each is associated with a "compliance" value for TAP with respect to the required ("0" if fully compliant, "1" if non-compliant, with possible intermediate values).

For each stage, the TAP coefficient value is calculated (according to an average of the values referring to the controlled parameters), and finally the TAP value for the entire production line.

*Subsystems for the calculation of $CO_2$ produced:* within each production process (agriculture, livestock farming, industrial processing) and for each complementary system (farm management, calculation systems, block-chain systems, distribution and logistics systems, transport, etc.) "elementary" processes are identified that allow the calculation of $CO_2$ produced.

A pathway is associated with each product, and on the basis of this the amount of $CO_2$ for each step is calculated, and then the total value as the sum total of all steps, to which is also added the contribution (calculated in percentage form) resulting from the production of $CO_2$ for all the activities corollary to pure production (so-called complementary systems), which are also responsible for $CO_2$ production and therefore need to be evaluated for a correct estimate of $CO_2$ to be associated with each individual product.

In the diagram in Figure 2, the case of the production line for making pasta intended for the preparation of ready meals is shown as an example: it is thus an "exploded" section of a part of the entire chain from the grain up to the production of a "first course product" in the "Piatti Pronti" Consortium.

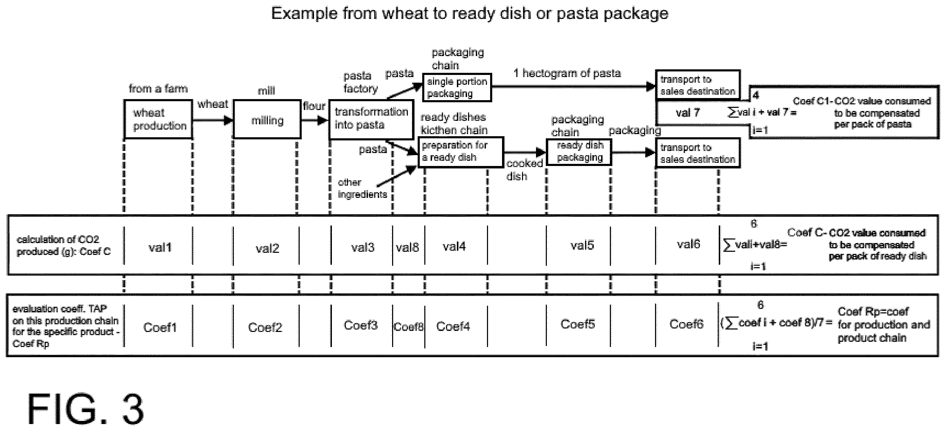

For uniformity with Figure 3, the value of TAP for the chain is marked as "Coef 3" and that of $CO_2$ produced as "Val3."

*Subsystems for calculating $CO_2$ compensation:* through Research Centers and Universities qualified in this discipline, the "equivalent" amounts of oxygen that can be produced through the action of plants are calculated, that is, the amount of $CO_2$ that is absorbed during chlorophyll photosynthesis to produce organic matter. These calculations are referred to specific areas selected from time to time, analyzing the type of forest tree species present, then the characteristic properties of each species in $CO_2$ uptake, and the likely evolutionary situation. This makes it possible, in this way, to calculate the "equivalent areas" necessary to ensure (through balancing) the zeroing of $CO_2$ produced.

Such areas are then "adopted" for both forest management, reforestation, and reuse of timber, or waste wood products in general.

In fact, through appropriate agreements with regional or governmental bodies in charge of environmental development and protection, it is possible, on the assigned areas, through planned forest management agreed upon with these bodies, to preserve and conserve the quality of ecological systems in all their physical and biological components, to restore functionally and structurally forest systems, and to implement forestry and phytosanitary interventions. Thus, it is envisaged to carry out ordinary and extraordinary maintenance works of the territories through also reforestation and re-establishment in territorial areas e.g. subject to intense erosion, for sustainable forest management, with particular reference to forest-wood and forest-non-wood products chains, including the management of the collection of wood and non-wood products and their reuse/recycling.

For each product, at the end of its processing pathway, once the equivalent amount of $CO_2$ is calculated, its balancing through the actions described above for oxygen recovery is provided, and the zeroing coefficient="0" of the TAP is set, recording this operation in the general control system as well.

*Calculation system for closing the circular economy cycle:* additional parameter to be considered in the calculation of the TAP coefficient is the realization of the complete circular economy cycle.

In this case, it is checked whether the reward return commitment (as co-participation in the whole process) is recognized to all "human" resources that have contributed to the realization of products.

The mechanism provides that at each stage of the transfer of a product (albeit a raw material) an "additional value" is recognized with respect to the already paid market price, which is annually predefined.

This benefit (thus present in all agricultural, industrial, etc. units of the production cycle) must then be distributed according to reward logic to all people who have worked in production.

The values of the TAP coefficient can be, in this case, only discrete (0 or 1), confirming or not, respectively, compliance with the circular economy mode, and thus allowing or excluding the possible final certification.

*System for recycling and energy production for its own uses:* the criteria for calculating the TAP coefficients to be associated with each process involving waste, and its reuse or recycling or transformation or finally disposal, are regulated by a specification that, type by type, identifies the different solutions that can be adopted and their equivalent TAP valorization.

*Certification system of transparency and uniqueness:* each product, starting from its raw material components, undergoes different transformations, combinations with other raw materials, treatments (mixes, cooking, etc.) storage, packaging and transportation.

By individual raw material, the entire path is verified, through molecular tracking, until it reaches the product (this also gives rise to a verification coefficient for TAP).

Each "elemental" step is tracked and stored on the computer platform, and TAP coefficients and quantities of $CO_2$ produced are uniquely associated with it.

At the end of the entire cycle, the individual product:

- receives, or has associated with it, an "*univocal*" code (detectable on the packaging via a QRcode);
- the aforementioned QR code allows for the identification of all stages of the process with the data associated with them (i.e., the components and their origin, the various TAP coefficients in the various processes, the value of $CO_2$ produced, and all nutritional information etc.), providing the total TAP value ("*transparency*");
- ensures $CO_2$ balancing ("*carbon free certification*").

Example - from seed to pasta

The case of the processing and production of pasta from wheat is described below as an example of the entire production chain.

Associated with the description is a graphical schematization (Figure 3) of the flows and calculations related to both TAP coefficients and $CO_2$ produced. The steps are as follows:

farm: from seed - cultivation - grain production;
mill: from grain - milling - flour production;
pasta factory: from flour - processing into pasta - production of pasta formats.

From here there are two possible subsequent flows:

A. Packaging system - from pasta format - packaging - single-portion package.
Transportation organization - from product to place of sale
B. Ready meal kitchen chain - from pasta (with addition of other ingredients, also TAP-compliant) - ready meal preparation - cooked preparation

Packaging system - from ready meal - packaging - single-portion package
Transportation organization - from the product to the place of sale

The calculation of coefficients for TAP certification is done as summarized below (example related to pasta ready meal).

Produced $CO_2$ compensation (C coefficient): a proportional amount derived from the electrical consumption of data processing and support facilities.

"yes" coefficient C=0
"no" coefficient C=1

Intermediate value of coefficient C: percentage value and complementary to full compensation (for example: compensated at 30% - value will be 0.70)

Compensation parameter for circular economy (R coefficient) (evaluated on the subsystems involved in the process).

"yes" coefficient R=0
"no" coefficient R=1

Intermediate value of R coefficient: percentage value and complementary to full compensation

Energy recycling-reconversion system and/or compensation (E coefficient) (evaluated on the subsystems involved in the process).

"yes" coefficient R=0
"no" coefficient R=1

Intermediate value of coefficient E: percentage value and complementary to full compensation

$$\text{TAP coefficient} = (\text{Rp coefficient} + \text{C coefficient} + \text{R coefficient} + \text{E coefficient})/4$$

If the TAP coefficient <0.25, the issuance of the univocal certification for the product is possible.

Specifically, a digital certificate is issued; associated with the product label will be all the information for its traceability, physical-chemical, nutritional and quality characteristics, the amount of $CO_2$ offset, and its uniqueness will prevent its possible counterfeiting.

The consumer, through their mobile phone/smartphone/mobile device, will be able, in real time, access all the information on the certificate, which will be delivered at the time of purchase.

If the TAP coefficient>0.40, the process is not TAP compliant, and therefore the certification is rejected.

In an intermediate case, corrective actions must be taken where the coefficient does not meet the required range.

It was thus seen how the invention achieves the proposed purposes.

The present invention has been described according to preferred embodiments, but equivalent variants can be devised without departing from the scope of protection offered by the following claims.

**Claims**

1. Integrated agro-industrial digital process, for the production of a food product or ready meal by a sequence of raw material processing steps, **characterized in that** it comprises the steps of:

   issuing a certification and compliance protocol for the product or ready-made dish;
   associating the product or ready-made dish with a respective transformation path of the raw materials involved in the production of said product or ready-made dish, which includes a plurality of steps:

   carrying out the molecular tracking of each raw material involved in the making of the product or ready-made meal;
   carrying out the production control in each processing step, so as to define a line coefficient (Rp), ranging from 0 (compliant) to 1 (non-compliant), with discrete or continuous values;
   calculating the $CO_2$ produced at each processing step, also considering the percentage contribution resulting from $CO_2$ production for all ancillary activities to pure production;
   calculating the amount of compensated $CO_2$, derived from specially provided forest or woodland areas, produced during said production steps, so as to define a compensation coefficient (C) of $CO_2$ produced, ranging from 0 (compliant) to 1 (non-compliant), with discrete or continuous values;
   verifying, for each processing step, the recognition of a premium return to all human resources that contributed to the realization of the product or ready-made dish, so as to define a coefficient of remuneration for circular economy (R), between 0 (compliant) and 1 (non-compliant), with discrete or continuous values;
   verifying, for each processing step, the recycling of waste products and/or energy conversion for own uses, so as to define a recycling coefficient (E), between 0 (compliant) and 1 (non-compliant), with discrete or continuous values;
   calculating the average of said coefficients (Rp, C, R, E), so as to obtain an overall coefficient of compliance (TAP) of the process with said protocol.

2. Process according to claim 1, comprising a step of processing a digital certificate of conformity of the process to said protocol in case said overall coefficient (TAP) is less than 0.25.

3. Process according to claim 2, wherein said step of processing a digital certificate of compliance is not implemented in case said overall coefficient (TAP) is greater than 0.40.

4. Process according to claim 3 comprising, in the event that said overall coefficient (TAP) is between 0.25 and 0.40, a step of modifying one or more operating modes in which one or more coefficients of the process do not meet the required range.

5. Process according to any one of claims 2-4, comprising a step of associating, with each product or ready meal, a univocal code detectable on its packaging by a QR code, or similar.

6. Process according to claim 5, wherein said QR code is suitable to provide, to the consumer, said coefficient (TAP) of the purchased product or ready meal, and/or all coefficients related to the various steps of the production process, and/or all other information regarding traceability, physicochemical, nutritional and quality characteristics, and the amount of $CO_2$ offset.

7. Process according to claim 5 or 6, wherein said QR code enables the consumer to view on their phone/smartphone/mobile device, said digital certificate relating to the product or ready meal.

8. Integrated agro-industrial digital system, for the production of a food product or ready meal by a sequence of processing steps of raw materials according to any of the preceding claims, configured to implement the process according to one or more of the preceding claims.

# PROTOCOL FLOW CHART

PAYMENT AT MKT PRICE    PAYMENT AT MKT PRICE    PAYMENT AT MKT PRICE

CONSORTIUM    MARKET

RAW MATERIAL    PRODUCE    FINAL PRODUCT

FARM    INDUSTRIAL FACILITIES

PREMIUM    PREMIUM    PREMIUM

**FIG. 1**

$CO_2$ PRODUCE 1  +  $CO_2$ PRODUCE 2  +  $CO_2$ PRODUCE 3  =  TOTAL $CO_2$

---

Example - Pasta factory - pasta production lines for the Piatti Pronti consortium (for first course)

**FIG.2**

| dough preparation | extrusion / forming | drying / wobbling | drying out | packaging for transport to delivery dishes |

some of the parameters to be evaluated for the quantification of the coef. TAP

dosage control temperature control humidity control consistency check

die control temperature control humidity control

temperature control humidty control timing control

temperature control humidty control timing control

casing type

physical parameters control

| TAP evauation on pasta production line Coef 3 | Coef 3-1 | Coef 3-2 | Coef 3-3 | Coef 3-4 | Coef 3-5 | Coef 3 | $\sum\limits_{i=1}^{5} coef\ 3\text{-}i/5$ |
|---|---|---|---|---|---|---|---|
| $CO_2$ produced (g): Val 3 | Val 3-1 | Val 3-2 | Val 3-3 | Val 3-4 | Val 3-5 | Val 3 | $\sum\limits_{i=1}^{5} Val\ 3\text{-}i$ |

Example from wheat to ready dish or pasta package

FIG. 3

Europäisches
Patentamt

European
Patent Office

Office européen
des brevets

**EUROPEAN SEARCH REPORT**

Application Number

EP 22 17 8501

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/300793 A1 (CHEN ANGELA [US] ET AL) 18 October 2018 (2018-10-18) * paragraph [0027] – paragraph [0028] * * paragraph [0040] * ----- | 1-8 | INV. G06Q10/06 |

TECHNICAL FIELDS SEARCHED (IPC)

G06Q

The present search report has been drawn up for all claims

| Place of search | Date of completion of the search | Examiner |
|---|---|---|
| Munich | 24 October 2022 | Reino, Bernardo |

EPO FORM 1503 03.82 (P04C01)

## ANNEX TO THE EUROPEAN SEARCH REPORT
## ON EUROPEAN PATENT APPLICATION NO.

EP 22 17 8501

This annex lists the patent family members relating to the patent documents cited in the above-mentioned European search report.
The members are as contained in the European Patent Office EDP file on
The European Patent Office is in no way liable for these particulars which are merely given for the purpose of information.

24-10-2022

| Patent document cited in search report | Publication date | Patent family member(s) | Publication date |
|---|---|---|---|
| US 2018300793 A1 | 18-10-2018 | US 2018300793 A1 | 18-10-2018 |
| | | WO 2018191434 A1 | 18-10-2018 |

EPO FORM P0459